# EUROPEAN PATENT SPECIFICATION

(11) **EP 2 946 149 B1**
(45) Date of publication and mention of the grant of the patent: **29.07.2020**
(21) Application number: 14702896.3
(22) Date of filing: 17.01.2014
(51) Int. Cl.: F28D 7/10, F28D 7/12, F28D 20/00

(54) **IMPROVEMENTS IN OR RELATING TO HEATING AND COOLING SYSTEMS**
VERBESSERUNGEN AN ODER IN ZUSAMMENHANG MIT HEIZ- UND KÜHLSYSTEMEN
AMÉLIORATIONS APPORTÉES OU SE RAPPORTANT À DES SYSTÈMES DE CHAUFFAGE ET DE REFROIDISSEMENT

(30) Priority: 18.01.2013 GB 201300962
(43) Date of publication of application: 25.11.2015
(73) Proprietor: Soltropy Limited, Glasgow, Strathclyde G76 7UX (GB)
(72) Inventor: SPEAKE, Stuart, Glasgow Strathclyde G76 7UX (GB)
(74) Representative: Hutchison, Craig McGregor
(86) International application number: PCT/GB2014/050136
(87) International publication number: WO 2014/111726

(56) References cited:
- WO-A1-02/01123
- WO-A1-2012/050454
- WO-A2-2006/096833
- DE-U1-202009 010 578
- JP-A- 2002 364 934
- US-A- 3 954 097
- US-A- 5 357 906
- US-A1- 2010 018 522

## Description

The present invention relates a manifold apparatus according to claim 1, a method of installing a manifold apparatus to a water heating system according to claim 6 and a solar heating or cooling apparatus according to claim 7.

Water heating systems, and in particular, water heating systems using solar thermal panels, are used to heat water from solar radiation. The solar panel typically includes a manifold through which fluid to be heated passes. The heat source members are thermally connected to the manifold to transfer heat thereto. The heated fluid is then pumped through a water storage tank to heat the water therein. The heated fluid is not mixed with the water in the storage tank and requires a heat exchanger component to be installed in the tank. The cooler fluid is then recirculated back through the manifold to be reheated. If the heating fluid becomes frozen, as a result of ambient weather conditions, damage can occur to the manifold, panel and pipework in the system due to the expansion of the frozen fluid. In order to prevent this damage, it is known to use fluids which have low freezing points, such as glycol, or fluids mixed with anti-freeze. It is also known to drain the system of fluid before cold weather spells are expected. This can be performed manually, or can be automated. The document US 3 954 097 A discloses a manifold apparatus according to the preamble of claim 1.

While these known systems are capable of providing heated water, and do not get damaged during freezing weather conditions, the use of specialised fluids, such as glycol, or the use of fluids mixed with anti-freeze, is problematic. For example, the use of glycol requires the system to be pressurised above atmospheric pressure. This is costly, requires regular maintenance and increases the chance of the system leaking. The use of anti-freeze poses a health and safety concern. Furthermore, these systems are costly and complex to install and maintain. Also, draining the system (and re-filling) is time consuming and awkward.

The present i present invention solves the shortcomings in the above-described apparatus and systems.

According to a first aspect of the present invention there is provided a manifold apparatus for a solar heating or cooling apparatus according to claim 1.

When the second conduit is located within the first conduit, fluid is capable of flowing in both of the conduits. In this arrangement the fluid in the first conduit is separate from the fluid in the second conduit.

The first and second conduits may be elongate members. The first and second conduits may have longitudinal and lateral axes. The first and second conduits may be symmetrical about their longitudinal and/or lateral axes.

The first conduit may be rigid. The first conduit may be made from a rigid material. The first conduit may be made from metal. The first conduit may be made from copper. The first conduit may be made form a material with low thermal resistivity/high thermal conductivity. The first conduit may be a metal pipe. The first conduit may be a copper pipe.

The first conduit may be made from a flexible material. The first conduit may be made from a plastic material.

The first conduit may be cylindrical. The first conduit may be a pipe or a tube. The first conduit may have a substantially circular lateral cross section. The first conduit may have a substantially square lateral cross section. The first conduit may have a substantially quadrilateral lateral cross section. The first conduit may have a substantially rectangular lateral cross section. The first conduit may have a non-symmetrical lateral cross section. The first conduit may have a planar top surface and a planar bottom surface.

The second conduit may be resilient in the direction of its longitudinal and/or lateral axes.

The second conduit may be made from a resilient material. The second conduit may be made from an elastic material. The second conduit may be deformable. The second conduit may be made from a deformable material.

The wall portions of the second conduit may be at least partially resilient. The wall portions of the second conduit may be resilient. The wall portions of the second conduit may be elastic. The wall portions of the second conduit may be deformable.

The second conduit may be made from a rubber material. The second conduit may be made from a sponge material. The second conduit may be made from a foam material. The second conduit may be made from a crushable or deformable foam material. The second conduit may be made from a silicone rubber material. The second conduit may be made from a closed cell material. The second conduit may be made from a silicone sponge material. The second conduit may be made from a closed cell silicone sponge. The second conduit may be made from a closed cell sponge silicone material. The second conduit may be made from a closed cell sponge rubber material. The second conduit may be made from a closed cell foam material.

The second conduit may be cylindrical. The second conduit may be a pipe or a tube. The second conduit may have a substantially circular lateral cross section. The second conduit may have a substantially square lateral cross section. The second conduit may have a substantially quadrilateral lateral cross section. The second conduit may have a substantially rectangular lateral cross section. The second conduit may have a non-symmetrical lateral cross section.

The first conduit and the second conduit may have different lateral cross sectional shapes.

The second conduit may be attachable to the first conduit. The second conduit may be fixable to an inner surface of the first conduit.

The first conduit may be sealed at one end thereof and the first and second conduits may be arranged such that fluid can flow between the first and second conduits. That is, in this arrangement fluid entering the first or second conduit may flow into the other of the first or second conduit. That is, fluid entering the first conduit of the fluid transport apparatus can exit the second conduit of the fluid transport apparatus and fluid entering the second conduit of the fluid transport apparatus can exit the first conduit of the fluid transport apparatus.

In this arrangement the second conduit may be spaced from the sealed end of the first conduit such that fluid can flow between the first and second conduits.

The second conduit may include one or more fluid flow apertures in the wall portions thereof. The fluid flow apertures may be a plurality of perforations, slots, or the like.

In this arrangement the second conduit may be abutted against the sealed end of the first conduit, or folded over upon itself. The flow apertures in the wall portions of the second conduit allow fluid to flow between the first and second conduits.

The first conduit may be sealed by a sealing member. The sealing member may be a cap, blank or plug member fixedly attached to the end of the first conduit to create a fluidic seal.

The first and second conduits may be substantially straight elongate members. The first and second conduits may be non-linear members. The first and second conduits may be S-shaped members. The first and second conduits may be curved. The first and second conduits may be substantially S-shaped. The first and second conduits may be substantially serpentine-shaped.

The first and second conduits may be non-linear members arranged to lie substantially on a plane. The first and second conduits may extend in a planar non-linear path. The first and second conduits may extend in a planar S-shaped path. The first and second conduits may extend in a planar serpentine-shaped path.

The first conduit may include one or more thermal transfer or exchange points or ports. The one or more thermal transfer points may include a low thermal resistance/high thermal conductivity portion.

The thermal transfer or exchange point or port may be an aperture located in the first conduit. The aperture may be adapted to receive at least a portion of a heat source member or a heat sink member therein. The aperture may be sealed between the first conduit and the heat source member or heat sink member. In this arrangement the heat source member or heat sink member is at least partially located within the first conduit. In this arrangement the heat source member or heat sink member is, in use, in fluid communication with fluid in the first conduit. That is, fluid in the first conduit is in contact with at least a portion of the outer surface of the heat source member or heat sink member. The first conduit may include a plurality of apertures, each aperture being arranged to at least partially receive a heat source member or a heat sink member therein.

According to the invention, the one or more thermal transfer points may include an attachment point for a heat source member or a heat sink member.

According to the invention, the one or more thermal transfer points may include an attachment point for a solar heat source member. The one or more thermal transfer points may include an attachment point for a solar vacuum tube/evacuated tube/evacuated heat pipe tube, flat plate collector, or the like. The one or more thermal transfer points may include an attachment point for an air conditioning unit.

The one or more thermal transfer points may include an attachment member for a heat source member or a heat sink member. Each thermal transfer point may include an attachment member.

The attachment member may be configured to secure the heat source member or heat sink member in engagement with the thermal transfer point of the first conduit.

According to the invention, the attachment member may be releasably securable to the first conduit.

The attachment member may be fixedly attachable to the first conduit.

The attachment member may be configured to receive at least a portion of the heat source member or heat sink member therein, or therethrough.

The attachment member may define an aperture for receiving at least a portion of the heat source member or heat sink member therein, or therethrough.

According to the invention, the attachment member may surround at least a portion of the outer surface of the solar heat source member.

The attachment member may include one or more tab portions, the tab portions being arranged to lie substantially flush with an outer surface of the first conduit. The attachment member may include two tab portions. The tab portions may be oppositely facing.

According to a second aspect of the present invention there is provided a method of installing a manifold apparatus to a water heating system, according to claim 6

According to another aspect of the present invention there is provided a heating and/or cooling apparatus , according to claim 7.

Embodiments of the present invention will now be described by way of example with reference to the accompanying drawings, in which:-
Figure 1 is a schematic illustration of a known vacuum tube solar panel water heating system;
Figure 2 is a cross sectional view of a vacuum tube of the solar panel of figure 1;
Figure 3 is a cross sectional, part cut away, view of the manifold apparatus of the vacuum tube solar panel of figure 1;
Figure 4a is a cross sectional side view of a manifold apparatus according to an aspect of the present invention with;
Figure 4b is a partial end perspective view of the first and second conduits of the manifold apparatus of figure 4a;
Figure 5 is a schematic illustration of a water heating system according to an aspect of the present invention;
Figures 6a to 6f are a second embodiment of manifold apparatus of the present invention; and
Figures 7a to 7e are a third embodiment of the manifold apparatus of the present invention.

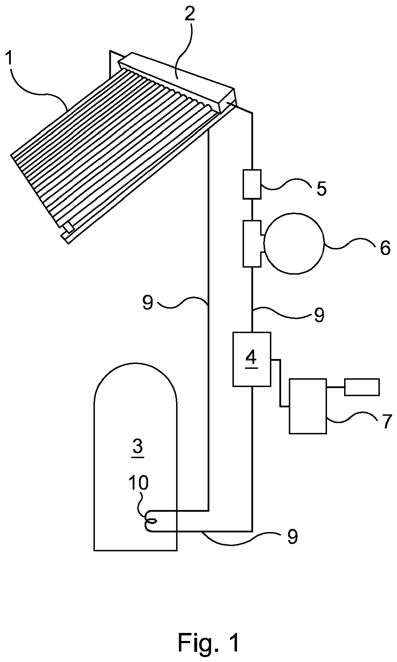

With reference to figures 1 to 3, known solar panel water heating systems, such as vacuum tube (or evacuated heat pipe tube) solar panel water heating systems, typically comprise a solar panel 1, which in this example is a vacuum tube solar panel, a manifold apparatus 2, a water storage tank 3, a pump 4, an anti-siphon valve, 5, an expansion vessel 6 and control apparatus 7.

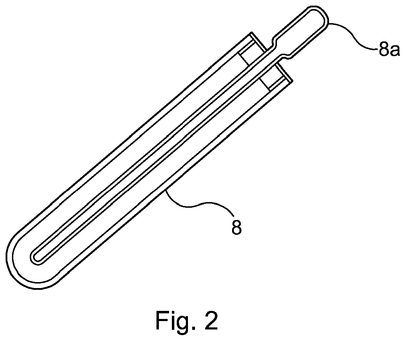

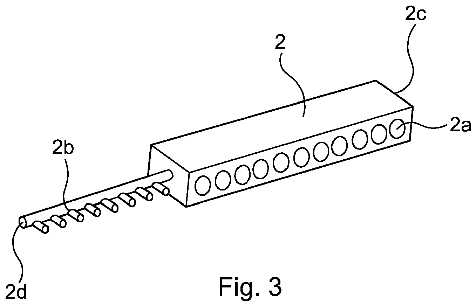

The vacuum tube 8 of the solar panel 1 is illustrated in figure 2. Such vacuum tubes 8 are known and the operation of which will not be described here. In use, i.e. when solar radiation is incident on the tube 8, the tip 8a of the tube 8 increases in temperature. The manifold apparatus 2 (see figure 3) includes a plurality of bores 2a, which are used to receive the tips 8a of the tubes 8 therein. The tips 8a of the tubes 8 make contact with a copper conduit 2b. Heat from the tips 8a of the tubes 8 is transferred to the copper conduit 2b to heat the fluid therein. Fluid enters the conduit 2b at one end 2c and exits at the other end 2d, or the other way round. It should be noted that part of the housing of the manifold apparatus 2 of figure 3 has been removed to allow viewing of the copper conduit 2b. The housing of the manifold apparatus 2 typically surrounds the entire copper conduit 2b and provides support and thermal insulation to the same.

As illustrated in figure 1, the conduit 2b of the manifold 2 is fluidly connected to a pipe network 9. The pipe network 9 enters the water storage tank 3 and, via a heat exchanger 10, heats up the water therein. The pump 4, anti-siphon valve, 5 and expansion vessel 6 are all fluidly connected in series in the pipe network 9. In use, the pump 4 circulates the fluid around the pipe network 9, i.e. circulating the fluid between the heat exchanger 10 and the manifold apparatus 1.

The fluid typically used in this system is glycol, due to its good thermal transfer characteristics and low freezing point. However, other fluids with similar characteristics can be used, or mixtures of fluids, such as water with anti-freeze. When glycol is used it is common that it is pressurised above ambient pressure. Pressurising the glycol increases the heat transfer thereof.

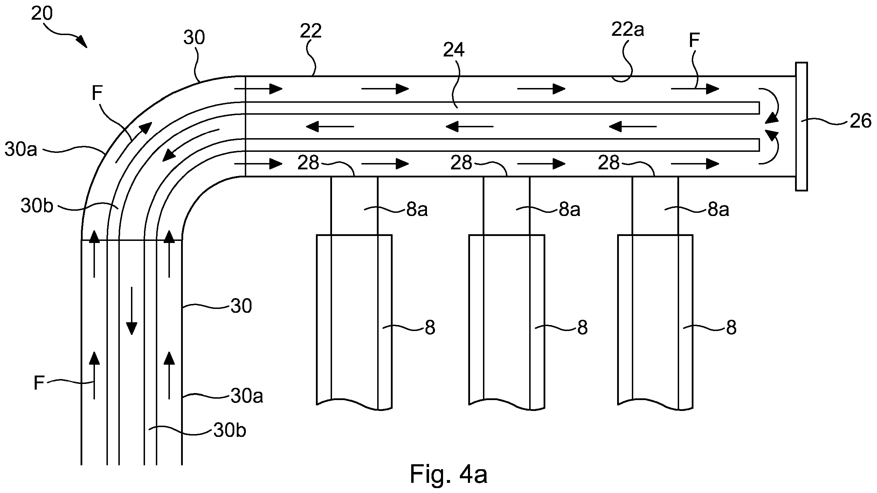

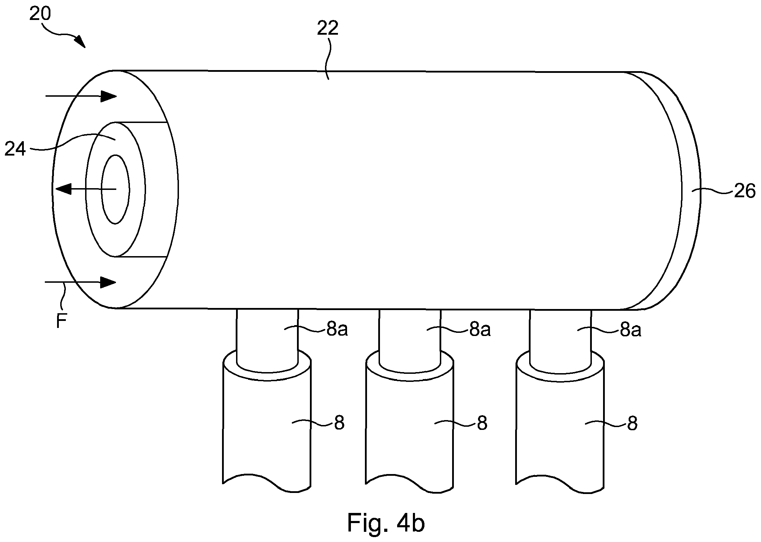

With reference to figures 4a and 4b, a manifold apparatus 20 according to the present invention includes a first conduit 22 and a second conduit 24. The second conduit 24 is located within the first conduit 22. Although not illustrated, it should be appreciated that the second conduit 24 may be attached to, and spaced from, the inner surface 22a of the first conduit 22 with one or more spacing members (not shown). However, it should also be appreciated that the second conduit 24 may be unattached to the first conduit 22.

The first conduit 22 is sealed at one end with a sealing member 26, which may be a cap, blank or plug member. The sealing member 26 is fixedly attached to the end of the first conduit 22 to create a fluid seal.

The first and second conduits 22, 24 are configured such that a fluid flow path F exists between the first and second conduits 22, 24. In the embodiment illustrated and described here, the second conduit 24 is located within the first conduit 22 such that it is spaced from the sealing member 26. However, it should be appreciated that other arrangements are possible. For example, the second conduit 24 could include a plurality of perforations, or other suitable apertures, at the end adjacent to the sealing member 26. This would allow the second conduit 24 to abut against the sealing member 26, or to be folded over upon itself.

In this arrangement, fluid entering the first conduit 22 or the second conduit 24 may flow into the other of the first conduit 22 or the second conduit 24. In the embodiment illustrated in figure 4a, fluid enters the first conduit 22 and exits the second conduit 24. In the embodiment illustrated in figure 4a, the fluid in the first conduit 22 surrounds the fluid in the second conduit 24. However, it should be appreciated that, depending on the location of the second conduit 24 in the first conduit 22, this may not always occur.

With reference to figure 4b, the first and second conduits 22, 24 are substantially cylindrical. That is, the first and second conduits 22, 24 have a substantially circular lateral cross section. However, it should be appreciated that the first and second conduits 22, 24 may have any suitable lateral cross sectional shape which allows the second conduit 24 to be located within the first conduit 22 and to allow a fluid flow path F to exist between the two conduits, as described above.

In the embodiment illustrated and described here, the first conduit 22 is a copper pipe. However, it should be appreciated that the first conduit may be made from any suitable material. It may be preferable that the first conduit 22 is made from a rigid metal material.

The second conduit 24 is made from a resilient (or elastic) material. In the embodiment illustrated and described here the second conduit 24 is made from a closed cell sponge silicone material, or a closed cell sponge rubber material. However, it should be appreciated that the second conduit 24 may be made from any suitable material that is deformable, or crushable, and which can return to its original shape after deformation.

With reference to figure 4b, the second conduit 24 has a significantly larger wall thickness than the first conduit 22. The walls of the second conduit 24 are reduced in thickness upon deformation thereof, and return to their original thickness after deformation thereof.

The first conduit 22 includes a plurality of thermal transfer points 28. The thermal transfer points 28 include low thermal resistance/high thermal conductivity portions which, in use, provide for efficient heat transfer from a heat source apparatus. In the embodiment illustrated and described here, three vacuum tubes (or evacuated heat pipe tubes) 8 (examples of heat source members of a heat source apparatus) are attached to the first conduit 22. The tips 8a are connected to the thermal transfer points 28 of the first conduit 22. The tips of the vacuum tubes 8 may be attached to the first conduit in any manner suitable to allow transfer of heat from the tubes 8 to the first conduit 22. The thermal transfer points 28 may be considered as heat transfer apparatus attachment points, or ports, to which the heat source apparatus may be attached, or received.

The manifold apparatus 20 also includes a housing, not shown, which houses the first and second conduits 22, 24. The housing may also provide support for the heat source apparatus when attached to the first conduit 22.

As illustrated in figure 4a, the first and second conduits 22, 24 may include one or more fluidly connected extension sections 30 which transfer fluid to and from the manifold apparatus 20. Each extension section 30 is an example of a fluid transport apparatus, according to the first aspect of the present invention. The extension sections have first and second conduits 30a, 30b, which may have the same properties and characteristics as the first and second conduits 22, 24 of the manifold apparatus 20. In particular, the second conduit 30b of the extension section 30 may be resilient.

The first and second conduits 22, 24 are connectable to a water heating system, as described below. The first and second conduits 22, 24 are configurable to be separately attachable to a water storage tank of a water heating system. One of the first and second conduits 22, 24 may be configured to be fluidly connectable with an upper end of the water storage tank and the other of the first and second conduits 22, 24 may be configured to be fluidly connectable with a lower end of the water storage tank. In this arrangement water can flow between the water storage tank and the manifold apparatus 20. That is, water can circulate through the water storage tank and the first and second conduits of the manifold apparatus.

As described above, the second conduit 24 is resilient. That is, the second conduit 24 is deformable and can return to its original shape after deformation. In operation, when fluid is in the manifold apparatus 20, i.e. fluid is in both of the first and second conduits 22, 24, and the ambient temperature is such that the fluid freezes, the fluid expands and crushes the second conduit 24. That is, the expansion of the freezing fluid in the manifold apparatus 20 applies a force to the second conduit 24, which causes the second conduit 24 to deform. The second conduit 24 thus reduces its volume to accommodate the volume expansion of the frozen fluid. It should be understood that the fluid inside and outside of the second conduit 24 freezes and it is the wall portions thereof that compress and take up the expansion of the water inside the conduit and outside the conduit.

The second conduit 24 being resilient, or being made from a resilient material, allows the fluid to expand upon freezing without damaging the manifold apparatus 20. That is, the resilience of the second conduit 24 prevents any damage occurring to either or both of the first and second conduits 22, 24 when the fluid expands upon freezing.

After the ambient temperature has increased such that the frozen fluid thaws, the second conduit 24 returns to its original shape. That is, because the second conduit 24 is resilient, or made from a resilient material, it can return to its original shape and the manifold apparatus 20 can function normally, as described above.

It should be noted that, because the extension sections 30 include resilient second conduits 24, the fluid can freeze and expand in the same manner and return to their original shape in the same manner as described above.

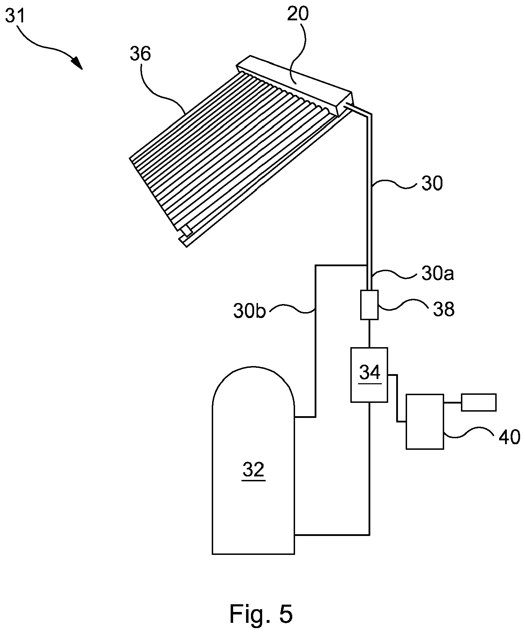

With reference to figure 5, the water heating system 31 according to the present invention comprises a water storage tank 32, a water pump 34, a heat source apparatus 36 and a manifold apparatus 20, as according to the second aspect of the invention. The water heating system 31 also includes an anti-siphon valve 38 and an electronic control device 40. The electronic control device 40 controls the operation of the pump, in the known manner.

In the embodiment illustrated and described here, the heat source apparatus 36 is a vacuum tube solar panel. However, it should be appreciated that any suitable heat source apparatus could be used to transfer heat to the manifold apparatus 20. The vacuum tubes of the solar panel may be attached to the manifold in the manner described above.

The first and second conduits 22, 24 of the manifold apparatus are fluidly connected to the water storage tank 32. In the embodiment illustrated and described here, the first conduit 22 is fluidly connected to the lower end of the water storage tank 32 and the second conduit 24 is fluidly connected to the upper end of the water storage tank 32. As illustrated in figure 5, the second conduit 24 is separated from the first conduit 22 before the anti-siphon valve. The second conduit 24 is separated from the first conduit 22 via an insert (not shown) which will seal between the first and second conduit 22, 24. This allows the splitting of the two conduits 22, 24 by means of a T connector. The insert may be made from a plastic or metal material.

The water pump 34 is fluidly connected between the water storage tank 32 and the manifold apparatus 20.

In use, solar radiation heats the tubes of the heat source apparatus 36 and the tips of the tubes increase in temperature in the known manner. Heat is then transferred to the first conduit 22 of the manifold apparatus 20, as described above. The water pump 34 is then operated to pump water from the bottom of the water tank 32 through the first conduits 30a of the extension sections 30 to the first conduit 22 of the manifold 20. The water at the bottom of the tank is generally colder than the water at the top of the tank. This colder water then heated as it passes through the first conduit 22 of the manifold apparatus 20. The heated water then flows into the second conduit 24 of the manifold apparatus 20. The heated water flows out of the second conduit 24 of the manifold apparatus 20 and into the second conduits 30b of the extension sections 30. The heated water is then separated from the extension section 30 before the anti-siphon valve 38 and is fed into the top end of the water tank 32. The water flowing through the manifold apparatus 20, water pump 34, extension sections 30 and anti-siphon valve 38 is the same water that is contained in the water tank 32. The pump 34 is operable to circulate the water between the storage tank 32 and the manifold apparatus 20 until the required temperature of water in the storage tank 32 is achieved.

Again, in operation, when fluid is in the manifold apparatus 20, i.e. fluid is in both of the first and second conduits 22, 24, and the ambient temperature is such that the fluid freezes, the fluid expands and crushes the second conduit 24. That is, the expansion of the freezing fluid in the manifold apparatus 20 applies a force to the second conduit 24, which causes the second conduit 24 to deform. The second conduit 24 thus reduces its volume to accommodate the volume expansion of the frozen fluid.

As described above, the second conduit 24 is resilient. That is, the second conduit 24 is deformable, or compressible, and can return to its original shape after deformation. In operation, when fluid is in the manifold apparatus 20, i.e. fluid is in both of the first and second conduits 22, 24, and the ambient temperature is such that the fluid freezes, the fluid expands and crushes the second conduit 24. That is, the expansion of the freezing fluid in the manifold apparatus 20 applies a force to the second conduit 24, which causes the second conduit 24 to deform. The second conduit 24 thus reduces its volume to accommodate the volume expansion of the frozen fluid.

The second conduit 24 being resilient, or being made from a resilient material, allows the fluid to expand upon freezing without damaging the manifold apparatus 20. That is, the resilience of the second conduit 24 prevents any damage occurring to either or both of the first and second conduits 22, 24 when the fluid expands upon freezing.

After the ambient temperature has increased such that the frozen fluid thaws, the second conduit 24 returns to its original shape. That is, because the second conduit 24 is resilient, or made from a resilient material, it can return to its original shape and the manifold apparatus 20 can function normally, as described above.

As described above, again because the extension sections 30 include resilient second conduits 24, the fluid contained therein can freeze and expand in the same manner and return to their original shape in the same manner as described above.

The manifold apparatus 20, the extension sections 30 and the water heating system 31 of the invention allow fluid contained therein to freeze without any damage occurring to the first or second conduits 22, 24, the heat source apparatus, the manifold housing, the roof, or the like, to which the heat source apparatus is attached. This avoids the need to drain fluid from the system during cold weather conditions.

Furthermore, since the flow and return paths to the manifold apparatus 20 occur in a single "coaxial" pipe, the heat source apparatus (and manifold) can be fitted to, for example, the roof of a house with a single aperture in the roof.

Also, since the fluid in the system is the water from the water tank 32, and not a separate fluid, it is not necessary to fit a heat exchanger to the water tank when fitting a new heat source apparatus and manifold apparatus 20 to an existing water heating system. In this case, an existing water storage tank can be used with the first and second conduits 22, 24 attached in the manner described above.

Furthermore, the water heating system 31 avoids the use of anti-freeze, which can pose a health and safety risk.

Also, since the hot water from the second conduit 24 enters the water storage tank 32 at the top end thereof, it mixes with warmer water, compared to the water at the bottom end of the water storage tank 32.

This reduces the risk of Legionnaires disease, as the heated water is being mixed with the warmer water at the top, as opposed to the colder water at the bottom of the water storage tank 32.

Furthermore, since the system does not need to be pressurised, as is typically required with known systems, such as the glycol system described above, leaks in the system are less common and can be managed more easily. Also, maintenance of a pressurised system is avoided.

Also, the water heating system 31 of the invention avoids the need for a pressure expansion apparatus, since the system is not pressurised.

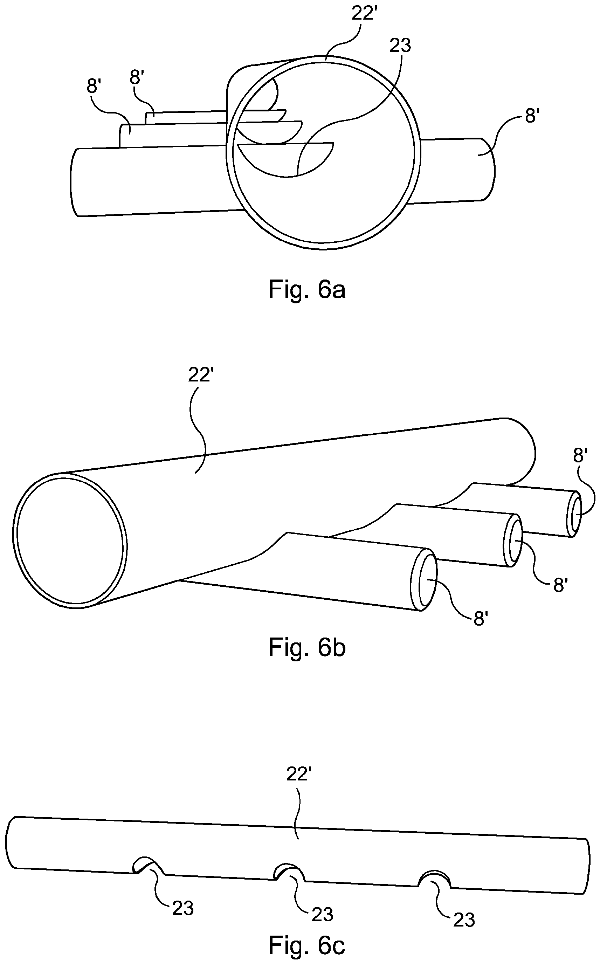

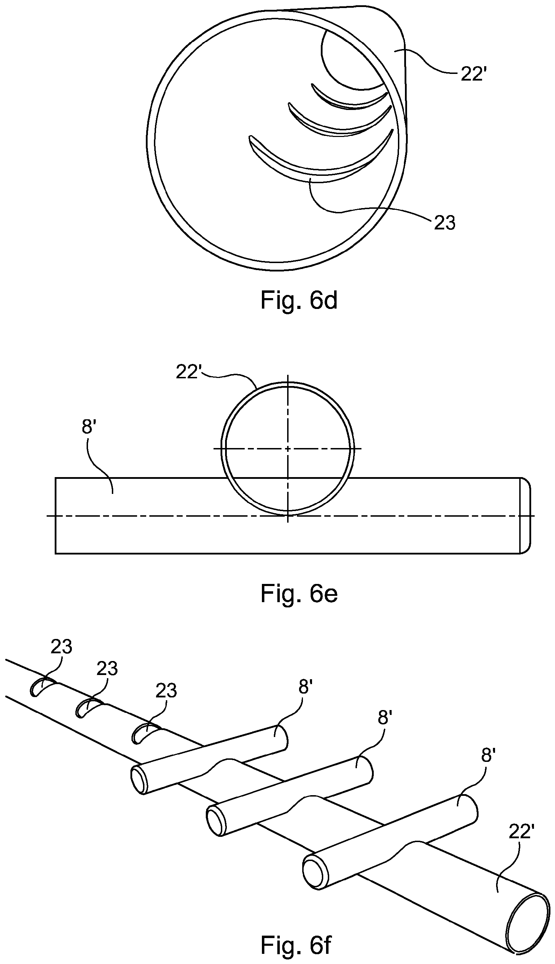

Figures 6a to 6f illustrate an alternate embodiment of the present invention. In this embodiment the vacuum tubes (or evacuated heat pipe tubes) 8' (examples of heat source members) are attached to the first conduit 22' in a different manner to first embodiment.

As illustrated in figures 6a to 6f, the first conduit 22' includes apertures 23. The apertures 23 are adapted to receive a portion of the vacuum tubes 8' therein. In this arrangement the vacuum tubes 8' are at least partially located within the first conduit 22', such that the outer surface 8a' of the vacuum tubes 8' are, in use, in fluid communication with fluid in the first conduit 22'. The vacuum tubes 8' are sealed in position with the first conduit 22'.

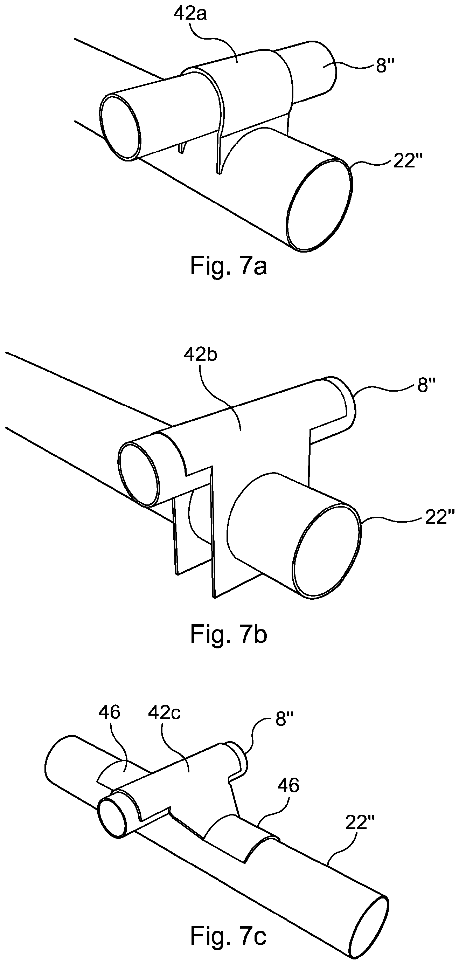

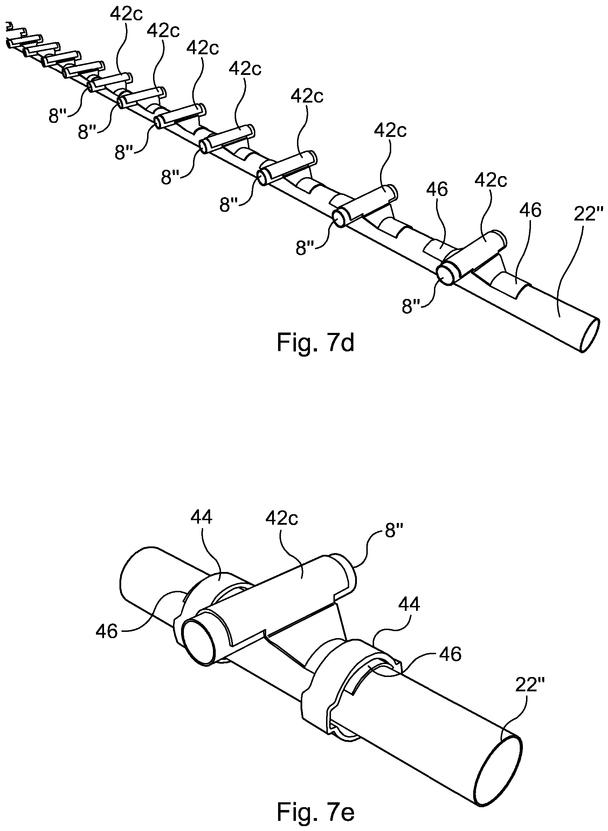

Figures 7a to 7e illustrate a further alternate embodiments of the present invention. In this embodiment attachment members 42a, 42b and 42c are provided to secure the vacuum tubes 8" to the first conduit 22". The attachment members 42a, 42b and 42c may be releasably securable to the first conduit 22" (see figure 7e). In this arrangement the attachment member 42c may be clamped to the first conduit 22" with a clasp member 44. Although it should be appreciated that other suitable types of devices may be used to clamp the attachment member 42c to the first conduit 22". Alternatively, the attachment member 42a, 42b may be fixedly attached to the first conduit 22" (see figures 7a to 7d). In this arrangement the attachment member 42a, 42b may be brazed to the first conduit 22".

As illustrated in figures 7a to 7e, the attachment members 42a, 42b and 42c are configured to receive at least a portion of the vacuum tubes 8" therethrough. In this arrangement the attachment member 42a, 42b and 42c surround the vacuum tubes 8".

As illustrated in figures 7c to 7e, the attachment portion 42c also includes tab portions 46. The tab portions 46 extend in opposite directions from the attachment portion 42c in the direction of the first conduit 22". The tab portions 46 are arranged such that they lie substantially flush with the outer surface of the first conduit 22". The tab portions 46 may be brazed to the first conduit 22". Alternatively, the tab portions 46 may provide a suitable area for the clasp member 44, described above.

Modifications and improvements may be made to the above without departing from the scope of the present invention. For example, although it has been illustrated and described above that the second conduit 24 is resilient, or made from a resilient material, it should be appreciated that both the first conduit 22 and the second conduit 24 may be resilient, or only the first conduit 22 could be resilient, with the operation of the apparatuses described above unchanged.

Furthermore, although the term "resilient" has been mainly used in the above description of the second (and first) conduits, it should be appreciated that the term "elastic", or compressible, may also be used. The important point is that the conduits are deformable and return to their original shape after deformation.

Also, although the manifold apparatus has been illustrated and described above as being used with a solar heating apparatus, it should be appreciated that the manifold apparatus may be used with other heat source apparatuses, such as flat plate collectors, or the like.

Furthermore, although the manifold apparatus 20 has been illustrated and described above as being used with a solar panel heating source apparatus, it should be appreciated that the manifold apparatus 20 may also be used with an air conditioning apparatus. In this arrangement, the heating and/or cooling members of the air conditioning apparatus are attached to the thermal transfer points of the first conduit and the operation of manifold is unchanged.

Also, although it should be appreciated that the first and/or second conduits 22, 24 may be made from a flexible, resilient material, such as a rubber hose, or a hose comprising one or more textile materials. The hose may be made from a material which as a low thermal resistance/high thermal conductivity rating.

## Claims

1. A manifold apparatus (20) for a solar heating or cooling apparatus comprising:
a first conduit (22) and a second conduit (24),
wherein the second conduit (24) is located within the first conduit (22) and wherein the first conduit (22) and/or the second conduit (24) are at least partially resilient, and
wherein the first conduit (22) is sealed at one end (26) thereof and the first (22) and second conduits (24) are configured such that a fluid flow path exists between the first (22) and second (24) conduits, and
wherein the first conduit (22) includes one or more thermal transfer points (28),
**characterised in that** each thermal transfer point (28) includes a solar heat source member attachment point,
wherein each thermal transfer point (28) includes an attachment member (42a) for the solar heat source member,
wherein the attachment member (42a) surrounds a portion of the outer surface of the solar heat source member, and
wherein the attachment member (42a) is releasably securable to the first conduit (22).

2. A manifold apparatus (20) according to claim 1, wherein the second conduit (24) is spaced from the sealed end (26) of the first conduit (22).

3. A manifold apparatus (20) according to claim 1, wherein the second conduit (24) includes one or more fluid flow apertures in the wall portion thereof.

4. A manifold apparatus (20) according to any of claims 1 to 3, wherein the first conduit (22) is made from a rigid material and the second conduit (24) is made from a resilient material.

5. A manifold apparatus (20) according to claim 4, wherein the first conduit (22) is made from copper and the second conduit (24) is made from one of the group consisting of a rubber material, a sponge material, a foam material, a closed cell material, a silicone rubber material, a silicone sponge material, a closed cell sponge rubber material, a closed cell sponge silicone material and a closed cell foam material.

6. A method of installing a manifold apparatus (20) to a water heating system (31), comprising the steps of:
providing a manifold apparatus (20) for a solar heating or cooling apparatus comprising:
a first conduit (22) and a second conduit (24),
wherein the second conduit (24) is located within the first conduit (22) and wherein the first conduit (22) and/or the second conduit (24) are at least partially resilient, and
wherein the first conduit (22) is sealed at one end (26) thereof and the first and second conduits are configured such that a fluid flow path exists between the first (22) and second conduits (24), and
wherein the first conduit (22) includes one or more thermal transfer points (28),
**characterised in that** each thermal transfer point (28) includes a solar heat source member attachment point, wherein each thermal transfer point (28) includes an attachment member (42a) for the solar heat source member, wherein the attachment member (42a) surrounds a portion of the outer surface of the solar heat source member, wherein the attachment member (42a) is releasably securable to the first conduit (22);
connecting a solar heat source apparatus (36) to the one or more thermal transfer points (28) of the first conduit (22) such that, in use, heat generated by the solar heat source apparatus (36) is transferred to the first conduit (22);
fluidly connecting one of the first (22) and second conduits (24) of the manifold apparatus (20) to an upper end of a water storage tank (32) and fluidly connecting the other of the first (22) and second conduits (24) of the manifold apparatus to a lower end of the water storage tank (32);
fluidly connecting a water pump (34) between the water storage tank (32) and the manifold apparatus (20), such that the water pump (34) is operable to circulate water between the water storage tank (32) and the manifold apparatus (20).

7. A solar heating or cooling apparatus comprising:
a manifold apparatus (20) for a solar heating or cooling apparatus comprising:
a first conduit (22) and a second conduit (24),
wherein the second conduit (24) is located within the first conduit (22) and wherein the first conduit (22) and/or the second conduit (24) are resilient, and
wherein the first conduit (22) is sealed at one end (26) thereof and the first (22) and second (24) conduits are configured such that a fluid flow path exists between the first (22) and second (24) conduits, and
wherein the first conduit (22) includes one or more thermal transfer points (28); and
one or more solar heating or cooling members (8), wherein the one or more solar heating or cooling members (8) are thermally connected to the one or more thermal transfer points (28) of the first conduit (22) of the manifold apparatus (20),
**characterised in that** each thermal transfer point (28) includes a solar heat source member attachment point,
wherein each thermal transfer point (28) includes an attachment member (42a) for the solar heat source member,
wherein the attachment member (42a) surrounds a portion of the outer surface of the solar heat source member, and
wherein the attachment member (42a) is releasably securable to the first conduit (22).

## Patentansprüche

1. Verteilereinrichtung (20) für eine Solarheiz- oder -kühleinrichtung, umfassend
eine erste Leitung (22) und eine zweite Leitung (24),
wobei die zweite Leitung (24) innerhalb der ersten Leitung (22) gelegen ist und wobei die erste Leitung (22) und/oder die zweite Leitung (24) mindestens teilweise elastisch sind, und
wobei die erste Leitung (22) an ihrem einen Ende (26) abgedichtet ist und die erste (22) und zweite Leitung (24) so gestaltet sind, dass ein Fluidströmungspfad zwischen der ersten (22) und zweiten (24) Leitung vorhanden ist, und
wobei die erste Leitung (22) einen oder mehrere Wärmeübertragungspunkte (28) beinhaltet,
**dadurch gekennzeichnet, dass** jeder Wärmeübertragungspunkt (28) einen Solarheizquellenelementbefestigungspunkt beinhaltet,
wobei jeder Wärmeübertragungspunkt (28) ein Befestigungselement (42a) für das Solarheizquellenelement beinhaltet,
wobei das Befestigungselement (42a) einen Abschnitt der Außenfläche des Solarheizquellenelements umgibt und
wobei das Befestigungselement (42a) lösbar an der ersten Leitung (22) anbringbar ist.

2. Verteilereinrichtung (20) nach Anspruch 1, wobei die zweite Leitung (24) von dem abgedichteten Ende (26) der ersten Leitung (22) beabstandet ist.

3. Verteilereinrichtung (20) nach Anspruch 1, wobei die zweite Leitung (24) eine oder mehrere Fluidströmungsöffnungen in ihrem Wandabschnitt beinhaltet.

4. Verteilereinrichtung (20) nach einem der Ansprüche 1 bis 3, wobei die erste Leitung (22) aus einem starren Material gebildet ist und die zweite Leitung (24) aus einem elastischen Material gebildet ist.

5. Verteilereinrichtung (20) nach Anspruch 4, wobei die erste Leitung (22) aus Kupfer gebildet ist und die zweite Leitung (24) aus einem der Gruppe bestehend aus einem Gummimaterial, einem Schwammmaterial, einem Schaummaterial, einem geschlossenzelligen Material, einem Silikongummimaterial, einem Silikonschwammmaterial, einem geschlossenzelligen Schwammgummimaterial, einem geschlossenzelligen Schwammsilikonmaterial und einem geschlossenzelligen Schaummaterial gebildet ist.

6. Verfahren zum Installieren einer Verteilereinrichtung (20) an einem Wasserheizsystem (31), umfassend die Schritte:
Bereitstellen einer Verteilereinrichtung (20) für eine Solarheiz- oder -kühleinrichtung, umfassend:
eine erste Leitung (22) und eine zweite Leitung (24),
wobei die zweite Leitung (24) innerhalb der ersten Leitung (22) gelegen ist und wobei die erste Leitung (22) und/oder die zweite Leitung (24) mindestens teilweise elastisch sind, und
wobei die erste Leitung (22) an ihrem einen Ende (26) abgedichtet ist und die erste und zweite Leitung so gestaltet sind, dass ein Fluidströmungspfad zwischen der ersten (22) und zweiten Leitung (24) vorhanden ist, und
wobei die erste Leitung (22) einen oder mehrere Wärmeübertragungspunkte (28) beinhaltet,
**dadurch gekennzeichnet, dass** jeder Wärmeübertragungspunkt (28) einen Solarheizquellenelementbefestigungspunkt beinhaltet, wobei jeder Wärmeübertragungspunkt (28) ein Befestigungselement (42a) für das Solarheizquellenelement beinhaltet, wobei das Befestigungselement (42a) einen Abschnitt der Außenfläche des Solarheizquellenelements umgibt und wobei das Befestigungselement (42a) lösbar an der ersten Leitung (22) anbringbar ist,
Verbinden einer Solarheizquelleneinrichtung (36) mit dem einen oder den mehreren Wärmeübertragungspunkten (28) der ersten Leitung (22), sodass in Verwendung Wärme, die durch die Solarheizquelleneinrichtung (36) erzeugt wird, zu der ersten Leitung (22) übertragen wird;
strömungstechnisches Verbinden einer der ersten (22) und zweiten Leitung (24) der Verteilereinrichtung (20) mit einem oberen Ende eines Wasserspeichertanks (32) und strömungstechnisches Verbinden der anderen der ersten (22) und zweiten Leitung (24) der Verteilereinrichtung mit einem unteren Ende des Wasserspeichertanks (32);
strömungstechnisches Verbinden einer Wasserpumpe (34) zwischen dem Wasserspeichertank (32) und der Verteilereinrichtung (20), sodass die Wasserpumpe (34) betreibbar ist, um Wasser zwischen dem Wasserspeichertank (32) und der Verteilereinrichtung (20) zu zirkulieren.

7. Solarheiz- oder -kühleinrichtung, umfassend:
eine Verteilereinrichtung (20) für eine Solarheiz- oder -kühleinrichtung, umfassend:
eine erste Leitung (22) und eine zweite Leitung (24),
wobei die zweite Leitung (24) innerhalb der ersten Leitung (22) gelegen ist und wobei die erste Leitung (22) und/oder die zweite Leitung (24) elastisch sind, und
wobei die erste Leitung (22) an ihrem einen Ende (26) abgedichtet ist und die erste (22) und zweite (24) Leitung so gestaltet sind, dass ein Fluidströmungspfad zwischen der ersten (22) und zweiten (24) Leitung vorhanden ist, und
wobei die erste Leitung (22) einen oder mehrere Wärmeübertragungspunkte (28) beinhaltet; und
ein oder mehrere Solarheiz- oder -kühlelemente (8), wobei das eine oder die mehreren Solarheiz- oder -kühlelemente (8) thermisch mit dem einen oder den mehreren Wärmeübertragungspunkten (28) der ersten Leitung (22) der Verteilereinrichtung (20) verbunden sind,
**dadurch gekennzeichnet, dass** jeder Wärmeübertragungspunkt (28) einen Solarheizquellenelementbefestigungspunkt beinhaltet,
wobei jeder Wärmeübertragungspunkt (28) ein Befestigungselement (42a) für das Solarheizquellenelement beinhaltet,
wobei das Befestigungselement (42a) einen Abschnitt der Außenfläche des Solarheizquellenelements umgibt und
wobei das Befestigungselement (42a) lösbar an der ersten Leitung (22) anbringbar ist.

## Revendications

1. Appareil collecteur (20) pour un appareil de chauffage ou de refroidissement solaire comprenant :
un premier conduit (22) et un second conduit (24),
dans lequel le second conduit (24) est situé dans le premier conduit (22) et dans lequel le premier conduit (22) et/ou le second conduit (24) sont au moins partiellement souples, et
dans lequel le premier conduit (22) est scellé à une extrémité (26) de celui-ci et les premier (22) et second conduits (24) sont configurés de sorte qu'un trajet de flux fluidique existe entre les premier (22) et second (24) conduits, et
dans lequel le premier conduit (22) inclut un ou plusieurs points de transfert thermique (28),
**caractérisé en ce que** chaque point de transfert thermique (28) inclut un point d'attache d'élément de source de chaleur solaire,
dans lequel chaque point de transfert thermique (28) inclut un élément d'attache (42a) pour l'élément de source de chaleur solaire,
dans lequel l'élément d'attache (42a) entoure une portion de la surface extérieure de l'élément de source de chaleur solaire, et
dans lequel l'élément d'attache (42a) est fixable de manière libérable au premier conduit (22).

2. Appareil collecteur (20) selon la revendication 1, dans lequel le second conduit (24) est espacé de l'extrémité scellée (26) du premier conduit (22).

3. Appareil collecteur (20) selon la revendication 1, dans lequel le second conduit (24) inclut une ou plusieurs ouvertures de flux fluidique dans la portion de paroi de celui-ci.

4. Appareil collecteur (20) selon l'une quelconque des revendications 1 à 3, dans lequel le premier conduit (22) est réalisé en un matériau rigide et le second conduit (24) est réalisé en un matériau souple.

5. Appareil collecteur (20) selon la revendication 4, dans lequel le premier conduit (22) est réalisé en cuivre et le second conduit (24) est réalisé en un du groupe constitué d'un matériau de caoutchouc, un matériau spongieux, un matériau de mousse, un matériau à pores fermés, un matériau de caoutchouc de silicone, un matériau de silicone spongieux, un matériau de caoutchouc spongieux à pores fermés, un matériau de silicone spongieux à pores fermés et un matériau de mousse à pores fermés.

6. Procédé d'installation d'un appareil collecteur (20) dans un système de chauffage d'eau (31), comprenant les étapes de :
la fourniture d'un appareil collecteur (20) pour un appareil de chauffage ou refroidissement solaire comprenant :
un premier conduit (22) et un second conduit (24),
dans lequel le second conduit (24) est situé dans le premier conduit (22) et dans lequel le premier conduit (22) et/ou le second conduit (24) sont au moins partiellement souples, et
dans lequel le premier conduit (22) est scellé à une extrémité (26) de celui-ci et les premier et second conduits sont configurés de sorte qu'un trajet de flux fluidique existe entre les premier (22) et second conduits (24), et
dans lequel le premier conduit (22) inclut un ou plusieurs points de transfert thermique (28),
**caractérisé en ce que** chaque point de transfert thermique (28) inclut un point d'attache d'élément de source de chaleur solaire, dans lequel chaque point de transfert thermique (28) inclut un élément d'attache (42a) pour l'élément de source de chaleur solaire, dans lequel l'élément d'attache (42a) entoure une portion de la surface extérieure de l'élément de source de chaleur solaire, dans lequel l'élément d'attache (42a) est fixable de manière détachable au premier conduit (22) ;
le raccordement d'un appareil de source de chaleur solaire (36) aux un ou plusieurs points de transfert thermique (28) du premier conduit (22) de sorte qu'en utilisation, de la chaleur générée par l'appareil de source de chaleur solaire (36) soit transférée au premier conduit (22) ;
le raccordement fluidique d'un des premier (22) et second conduits (24) de l'appareil collecteur (20) à une extrémité supérieure d'un réservoir de stockage d'eau (32) et le raccordement fluidique de l'autre des premier (22) et second conduits (24) de l'appareil collecteur à une extrémité inférieure du réservoir de stockage d'eau (32) ;
le raccordement fluidique d'une pompe à eau (34) entre le réservoir de stockage d'eau (32) et l'appareil collecteur (20) de sorte que la pompe à eau (34) soit actionnable pour faire circuler de l'eau entre le réservoir de stockage d'eau (32) et l'appareil collecteur (20).

7. Appareil de chauffage ou refroidissement solaire comprenant :
un appareil collecteur (20) pour un appareil de chauffage ou refroidissement solaire comprenant :
un premier conduit (22) et un second conduit (24),
dans lequel le second conduit (24) est situé dans le premier conduit (22) et dans lequel le premier conduit (22) et/ou le second conduit (24) sont souples, et
dans lequel le premier conduit (22) est scellé à une extrémité (26) de celui-ci et les premier (22) et second (24) conduits sont configurés de sorte qu'un trajet de flux fluidique existe entre les premier (22) et second (24) conduits, et
dans lequel le premier conduit (22) inclut un ou plusieurs points de transfert thermique (28) ; et
un ou plusieurs éléments de chauffage ou refroidissement solaire (8), dans lequel les un ou plusieurs éléments de chauffage ou refroidissement solaire (8) sont raccordés thermiquement aux un ou plusieurs points de transfert thermique (28) du premier conduit (22) de l'appareil collecteur (20),
**caractérisé en ce que** chaque point de transfert thermique (28) inclut un point d'attache d'élément de source de chaleur solaire,
dans lequel chaque point de transfert thermique (28) inclut un élément d'attache (42a) pour l'élément de source de chaleur solaire,
dans lequel l'élément d'attache (42a) entoure une portion de la surface extérieure de l'élément de source de chaleur solaire, et
dans lequel l'élément d'attache (42a) est fixable de manière détachable au premier conduit (22).
